(19) Europäisches Patentamt / European Patent Office / Office européen des brevets

(11) **EP 4 336 059 B1**

(12) **FASCICULE DE BREVET EUROPEEN**

(45) Date de publication et mention
de la délivrance du brevet:
**04.02.2026  Bulletin 2026/06**

(21) Numéro de dépôt: **23194957.9**

(22) Date de dépôt: **01.09.2023**

(51) Classification Internationale des Brevets (IPC):
*F16C 3/02* *(2006.01)*     *F16C 17/02* *(2006.01)*
*F16C 33/02* *(2006.01)*     *F16C 33/10* *(2006.01)*

(52) Classification Coopérative des Brevets (CPC):
**F16C 33/02; F01D 15/12; F01D 25/168;
F01D 25/186; F02C 7/36; F16C 3/02; F16C 17/02;
F16C 33/1055;** F05D 2240/54; F05D 2260/40311;
F16C 2361/61; F16H 2057/085

(54) **PALIER LISSE POUR UN RÉDUCTEUR MÉCANIQUE DE TURBOMACHINE D'AÉRONEF**

GLEITLAGER FÜR EIN MECHANISCHES REDUKTIONSGETRIEBE EINES TURBOTRIEBWERKS
EINES LUFTFAHRZEUGS

PLAIN BEARING FOR A MECHANICAL GEAR OF AN AIRCRAFT TURBINE ENGINE

(84) Etats contractants désignés:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priorité:  **09.09.2022  FR 2209064**

(43) Date de publication de la demande:
**13.03.2024  Bulletin 2024/11**

(73) Titulaire: **Safran Transmission Systems
92700 Colombes (FR)**

(72) Inventeurs:
• **PAP, Bálint
  77550 Moissy-Cramayel (FR)**
• **CASTELOOT, Cyrille
  77550 Moissy-Cramayel (FR)**

(74) Mandataire: **Gevers & Orès
Immeuble le Palatin 2
3 Cours du Triangle
CS 80165
92939 Paris La Défense Cedex (FR)**

(56) Documents cités:
WO-A1-2019/053374     FR-A1- 3 071 022
FR-A1- 3 098 562     US-A1- 2020 378 436

## Description

## Domaine technique de l'invention

La présente invention concerne le domaine des réducteurs mécaniques pour des turbomachines en particulier d'aéronef, et concerne plus particulièrement un palier lisse pour un tel réducteur.

## Arrière-plan technique

L'état de l'art comprend notamment les documents US-A1-2020/0378436, WO-A1-2019/053374, FR-A1-3 071 022 et FR-A1-3 098 562. WO-A1-2019/053374 divulgue un palier lisse de réducteur mécanique de turbomachine selon le préambule de la revendication 1.

Le rôle d'un réducteur mécanique est de modifier le rapport de vitesse et de couple entre l'axe d'entrée et l'axe de sortie d'un mécanisme.

Les nouvelles générations de turbomachines à double flux, notamment celles ayant un haut taux de dilution, comportent un réducteur mécanique pour entraîner l'arbre d'une soufflante (aussi appelé « fan »). De manière usuelle, le réducteur a pour but de transformer la vitesse de rotation dite rapide de l'arbre d'une turbine de puissance en une vitesse de rotation plus lente pour l'arbre entraînant la soufflante.

Un tel réducteur comprend un pignon central, appelé solaire, une couronne et des pignons appelés satellites, qui sont en prise entre le solaire et la couronne. Les satellites sont maintenus par un châssis appelé porte-satellites. Le solaire, la couronne et le porte-satellites sont des planétaires car leurs axes de révolution coïncident avec l'axe longitudinal X de la turbomachine. Les satellites ont chacun un axe de révolution Y différent, ils sont équirépartis sur le même diamètre de fonctionnement autour de l'axe des planétaires. Ces axes Y sont parallèles à l'axe longitudinal X.

Il existe plusieurs architectures de réducteur. Dans l'état de l'art des turbomachines à double flux, les réducteurs sont de type planétaire ou épicycloïdal. Il existe dans d'autres applications similaires, des architectures dites différentielles ou « compound ».

- Sur un réducteur planétaire, le porte-satellites est fixe et la couronne constitue l'arbre de sortie du dispositif qui tourne dans le sens inverse du solaire.
- Sur un réducteur épicycloïdal, la couronne est fixe et le porte-satellites constitue l'arbre de sortie du dispositif qui tourne dans le même sens que le solaire.
- Sur un réducteur différentiel, aucun élément n'est fixé en rotation. La couronne tourne dans le sens contraire du solaire et du porte-satellites. Les réducteurs peuvent comprendre un ou plusieurs étages d'engrènement. Cet engrènement est assuré de différentes façons comme par contact, par friction ou encore par champs magnétique. Il existe plusieurs types d'engrènement par contact comme avec des dentures droites ou en chevron. Un réducteur doit être lubrifié et l'apport d'huile de lubrification aux composants tournants d'un réducteur peut être problématique. L'huile est en général amenée au réducteur par un distributeur d'huile de lubrification.

Les satellites sont guidés en rotation par des paliers qui sont lubrifiés. Les paliers peuvent être composés d'éléments roulants (roulements à billes, à rouleaux, à rouleaux coniques, etc.) ou peuvent être des paliers hydrodynamiques. Dans ce dernier cas, chaque satellite est monté rotatif sur et autour d'un palier lisse porté par le porte-satellites. Ce palier lisse est alimenté en huile et est configuré pour former un film d'huile entre sa périphérie externe et la périphérie interne du satellite qu'il guide. Pour cela, dans la technique actuelle, chaque satellite comprend une surface cylindrique interne qui s'étend autour d'une surface cylindrique externe du palier lisse et qui délimite avec cette dernière un espace annulaire de formation du film d'huile. Cet espace est alimenté en huile par des orifices d'acheminement d'huile qui sont formés dans le palier lisse et s'étendent depuis la surface cylindrique externe jusqu'à une cavité interne du palier lisse qui est alimentée en huile par le distributeur précité.

La présente demande concerne un réducteur dont les satellites sont guidés par ce type de paliers lisses ou paliers hydrodynamiques.

Dans la technique actuelle, un palier lisse comprend un corps monobloc qui a une forme générale allongée et qui est fixé par ses extrémités longitudinales à deux parois opposées d'une cage du porte-satellites. Pour cela, le corps du palier lisse comprend des extensions axiales à ses extrémités longitudinales qui sont logées dans des orifices du porte-satellites. Pour permettre le montage des paliers et des satellites dans la cage du porte-satellites, les orifices de réception des extensions de chaque palier sont formés dans des couvercles annulaires qui sont rapportés et fixés sur les parois de la cage.

En fonctionnement, les satellites et leurs paliers lisses sont soumis à des charges qui ne sont pas régulièrement réparties autour de leurs axes et qui sont au contraire localisées autour de ces axes. Ces charges sont susceptibles d'entraîner des désalignements entre les satellites et leurs paliers lisses et entraîner notamment des variations d'épaisseur des films d'huile de guidage des satellites.

Pour limiter ce phénomène, il est connu de prévoir des zones de souplesse aux extrémités longitudinales du corps de chaque palier lisse. En pratique, le corps du palier lisse comprend à chacune de ses extrémités longitudinales un rebord circonférentiel ou annulaire qui s'étend autour de l'extension de montage de cette extrémité et qui prolonge axialement la surface externe du corps.

Chaque zone de souplesse peut s'étendre tout autour de l'axe du palier lisse. Dans ce cas, le rebord précité est annulaire et définit un espace annulaire autour de l'extension. En variante, la zone de souplesse s'étend sur une partie angulaire prédéterminée autour de l'axe du palier lisse. Dans ce cas, le rebord est circonférentiel et définit un espace circonférentiel autour de l'extension.

Dans la technique actuelle, lorsque des zones de souplesse sont prévues sur le corps d'un palier lisse, ce palier lisse est nécessairement monté sur la cage du porte-satellites avec des couvercles rapportés, comme évoqué dans ce qui précède.

Cependant, l'utilisation de couvercles rapportés rallonge la chaine de côtes, le long de l'axe du palier, et donc augmente davantage le risque de désalignement géométrique du palier lié aux tolérances de fabrication.

La présente invention propose un perfectionnement simple, efficace et économique pour faciliter le montage et limiter le risque de désalignement d'un palier lisse de réducteur mécanique.

**Résumé de l'invention**

L'invention concerne un palier lisse pour un réducteur mécanique de turbomachine selon la revendication 1, en particulier d'aéronef, le palier lisse étant formé d'une seule pièce et comprenant :

- un corps cylindrique ayant une forme générale allongée le long d'un axe et comportant :

   + une surface cylindrique externe de guidage s'étendant autour de l'axe,
   + une cavité interne qui s'étend le long de l'axe,
   + des orifices formés dans le corps et s'étendant depuis la cavité jusque sur la surface ou jusqu'à une rainure formée sur cette surface,
   + une première extension axiale de montage située à une première extrémité longitudinale du corps,
   + un premier rebord circonférentiel s'étendant en partie autour de l'axe et de la première extension, et prolongeant axialement ladite surface,
   + une seconde extension axiale de montage située à une seconde extrémité longitudinale opposée du corps, et
   + un second rebord circonférentiel s'étendant en partie autour de l'axe et de la seconde extension, et prolongeant axialement ladite surface,

le palier lisse comprenant en outre :

- un couvercle de fixation qui est relié à ladite première extension axiale et qui s'étend axialement en regard dudit premier rebord, le couvercle comprenant une bride annulaire externe de fixation ou des pattes externes de fixation, cette bride ou ces pattes comportant des orifices orientés axialement et destinés à recevoir des éléments de fixation.

L'invention propose ainsi d'intégrer un couvercle au palier lisse, c'est-à-dire que le couvercle est formé d'une seule pièce avec le corps du palier lisse et ne forme plus une pièce séparée et indépendante. L'extrémité du corps reliée au couvercle peut donc être fixée directement à une paroi du porte-satellites, ou de sa cage, ce qui réduit le problème lié à la chaine de côtes de ce côté-là du palier lisse. L'autre côté du palier lisse peut être monté sur une paroi du porte-satellites de manière classique, par un couvercle rapporté par exemple.

Une autre des particularités du palier lisse est lié au fait que les zones de souplesse aux extrémités longitudinales de son corps sont circonférentielles et ont donc une étendue angulaire prédéterminée (inférieure à 360°) autour de l'axe du corps. Les zones de souplesse sont en général réalisées par usinage et leur limitation angulaire pour permettre de simplifier la fabrication du palier lisse, d'autant plus quand un couvercle est intégré au corps de ce palier lisse.

La solution proposée est compatible d'un réducteur simple étage ou à plusieurs étages. La solution proposée est compatible d'un réducteur dit épicycloïdal, planétaire ou différentiel. La solution proposée est compatible de dentures droites, hélicoïdales ou en chevron. Enfin, la solution proposée est compatible de tout type de porte-satellites qu'il soit monobloc ou de type cage et porte-cage.

Le palier lisse selon l'invention peut comprendre une ou plusieurs des caractéristiques suivantes, prises isolément les unes des autres, ou en combinaison les unes avec les autres :

- le couvercle a une forme générale annulaire ou de disque et comprend un diamètre externe supérieur à un diamètre externe de ladite surface ;
- le couvercle comporte une lumière traversante en direction axiale, cette lumière ayant une forme incurvée et s'étendant en direction circonférentielle autour de l'axe ;
- la lumière a une étendue angulaire supérieure ou égale à une étendue angulaire dudit premier rebord, et est située en regard d'un espace circonférentiel défini entre le premier rebord et la première extension ;
- la lumière a une dimension radiale, mesurée par rapport à l'axe, qui est supérieure à une dimension radiale dudit espace, mesurée de la même façon ;
- ladite cavité traverse axialement la première extension et le couvercle, et est de préférence fermée au niveau de ladite seconde extension ;
- les premier et second rebords ont une même étendue angulaire autour de l'axe et sont disposés de manière symétrique par rapport à un plan médian du corps perpendiculaire audit axe ;
- le corps comprend une rainure qui est formée sur ladite surface et qui a une forme allongée le long de l'axe, lesdits orifices débouchant dans cette rainure qui est décalée angulairement desdits premier et second rebords et qui a une longueur inférieure à une dimension axiale minimale de ladite surface ;

- 0,02 < H/Q < 0,5, et/ou 0,02 < H/R < 2, et/ou 0,02 < H/D2 < 0,35, et/ou 0,02 < R/Q < 0,4, avec :

  + H une dimension radiale d'un espace circonférentiel défini entre le premier rebord et la première extension, ou d'un espace circonférentiel défini entre le second rebord et la seconde extension, mesurée par rapport à l'axe,
  + Q une dimension axiale maximale de la surface mesuré le long de l'axe au niveau desdites première et seconde extensions axiales,
  + R une dimension axiale maximale dudit espace circonférentiel, mesurée le long de l'axe, et
  + D2 un diamètre interne maximal de la cavité, mesurée par rapport à l'axe ;

- B < F, et/ou B < H , et/ou B < R, avec :

  + B une distance axiale entre le premier rebord et le couvercle, mesurée le long de l'axe,
  + F une épaisseur axiale maximale du couvercle, mesurée le long de l'axe,
  + H une dimension radiale d'un espace circonférentiel défini entre le premier rebord et la première extension, ou d'un espace circonférentiel défini entre le second rebord et la seconde extension, mesurée par rapport à l'axe, et
  + R une dimension axiale maximale dudit espace circonférentiel, mesurée le long de l'axe ;

- B > 2.F et de préférence supérieur B > 3.F, et/ou B > 2.H et de préférence supérieur B > 3.H, et/ou B > 2.R et de préférence supérieur B > 3.H, avec :

  + B une distance axiale entre le premier rebord et le couvercle, mesurée le long de l'axe,
  + F une épaisseur axiale maximale du couvercle, mesurée le long de l'axe,
  + H une dimension radiale d'un espace circonférentiel défini entre le premier rebord et la première extension, ou d'un espace circonférentiel défini entre le second rebord et la seconde extension, mesurée par rapport à l'axe, et
  + R une dimension axiale maximale dudit espace circonférentiel, mesurée le long de l'axe ;

-- le palier lisse comprend en outre un autre couvercle de fixation qui est relié à ladite seconde extension axiale et qui s'étend axialement en regard dudit second rebord ;
-- le couvercle relié à la seconde extension axiale a un diamètre inférieur ou égal à celui du couvercle relié à la première extension axiale ;
-- le couvercle relié à la second extension axiale est dépourvu de bride ou de pattes de fixation ;
-- le couvercle relié à la seconde extension axiale a une forme générale annulaire ou de disque et comprend un diamètre externe supérieur à un diamètre externe de ladite surface ;
-- le couvercle relié à la seconde extension axiale comporte une lumière traversante en direction axiale, cette lumière ayant une forme incurvée et s'étendant en direction circonférentielle autour de l'axe ;
-- la lumière a une étendue angulaire supérieure ou égale à une étendue angulaire dudit second rebord, et est située en regard d'un espace circonférentiel défini entre le second rebord et la seconde extension ;
-- la lumière a une dimension radiale, mesurée par rapport à l'axe, qui est supérieure à une dimension radiale dudit espace, mesurée de la même façon ; et
-- ladite cavité traverse axialement la seconde extension et le couvercle. L'invention concerne en outre un réducteur mécanique de turbomachine, en particulier d'aéronef, comportant au moins un palier lisse tel que décrit ci-dessus.

Le réducteur comporte de préférence :

- un solaire ayant un premier axe de rotation,
- une couronne qui s'étend autour du solaire,
- des satellites qui sont engrenés avec le solaire et la couronne,
- des paliers lisses de guidage en rotation des satellites autour de seconds axes de rotation parallèles audit premier axe de rotation, et
- un porte-satellites qui comprend une cage définissant un logement de réception du solaire, des satellites et des corps des paliers lisses, cette cage comportant deux parois perpendiculaires auxdits premier et seconds axes de rotation, une première de ces parois comportant des premiers orifices de montage de couvercles comportant eux-mêmes des orifices de montage des secondes extensions axiales des corps des paliers lisses, et une seconde de ces parois comportant des seconds orifices de montage des couvercles des paliers lisses.

Avantageusement, les seconds orifices ont un diamètre supérieur au diamètre des premiers orifices, ces diamètres étant mesurés par rapport au second axe de rotation correspondant.

Avantageusement, les premier et second rebords des corps des paliers lisses sont situés du côté du solaire.

L'invention concerne en outre une turbomachine, en particulier d'aéronef, comportant un palier lisse ou au moins un réducteur mécanique tel que décrit ci-dessus.

**Brève description des figures**

D'autres caractéristiques et avantages ressortiront de la description qui suit d'un mode de réalisation non limitatif de l'invention en référence aux dessins annexés sur lesquels :

[Fig. 1] la figure 1 est une vue schématique partielle en coupe axiale d'une turbomachine utilisant l'invention,

[Fig. 2] la figure 2 est une vue schématique partielle en coupe axiale d'un réducteur mécanique,

[Fig. 3] la figure 3 est vue schématique partielle similaire à celle de la figure 2 et montre un palier lisse de la technique antérieure,

[Fig. 4] la figure 4 est une vue schématique en perspective d'un palier lisse selon un mode de réalisation de l'invention,

[Fig. 5] la figure 5 est une autre vue schématique en perspective du palier lisse de la figure 4,

[Fig. 6] la figure 6 est vue schématique en coupe axiale du palier lisse de la figure 4,

[Fig. 7] la figure 7 est une vue très schématique de face du palier lisse de la figure 4 et montre des paramètres géométriques de ce palier lisse,

[Fig. 8] la figure 8 est vue schématique en coupe axiale d'un palier lisse selon une variante de réalisation de l'invention,

[Fig. 9] la figure 9 est une vue schématique en perspective d'un palier lisse selon une variante de réalisation de l'invention,

[Fig. 10] la figure 10 est une vue schématique en coupe axiale du palier lisse de la figure 9, et

[Fig. 11] la figure 11 est une vue similaire à celle de la figure 10 et illustre une autre variante de réalisation de l'invention.

## Description détaillée de l'invention

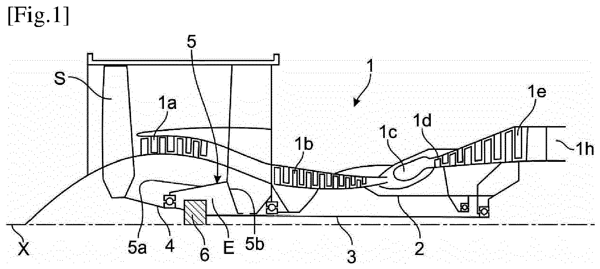

La figure 1 décrit une turbomachine 1 qui comporte, de manière classique, une soufflante S, un compresseur basse pression 1a, un compresseur haute pression 1b, une chambre annulaire de combustion 1c, une turbine haute pression 1d, une turbine basse pression 1e et une tuyère d'échappement 1h. Le compresseur haute pression 1b et la turbine haute pression 1d sont reliés par un arbre haute pression 2 et forment avec lui un corps haute pression (HP). Le compresseur basse pression 1a et la turbine basse pression 1e sont reliés par un arbre basse pression 3 et forment avec lui un corps basse pression (BP).

La soufflante S est entraînée par un arbre de soufflante 4 qui est entrainé à l'arbre BP 3 au moyen d'un réducteur 6. Ce réducteur 6 est généralement de type planétaire ou épicycloïdal.

Le réducteur 6 est positionné dans la partie amont de la turbomachine. Dans la présente demande, les expressions amont et aval font référence à l'écoulement général des gaz dans la turbomachine, le long de son axe d'allongement ou de rotation de ses rotors. Une structure fixe comportant schématiquement, ici, une partie amont 5a et une partie aval 5b qui compose le carter moteur ou stator 5 est agencée de manière à former une enceinte E entourant le réducteur 6. Cette enceinte E est ici fermée en amont par des joints au niveau d'un palier permettant la traversée de l'arbre de soufflante 4, et en aval par des joints au niveau de la traversée de l'arbre BP 3.

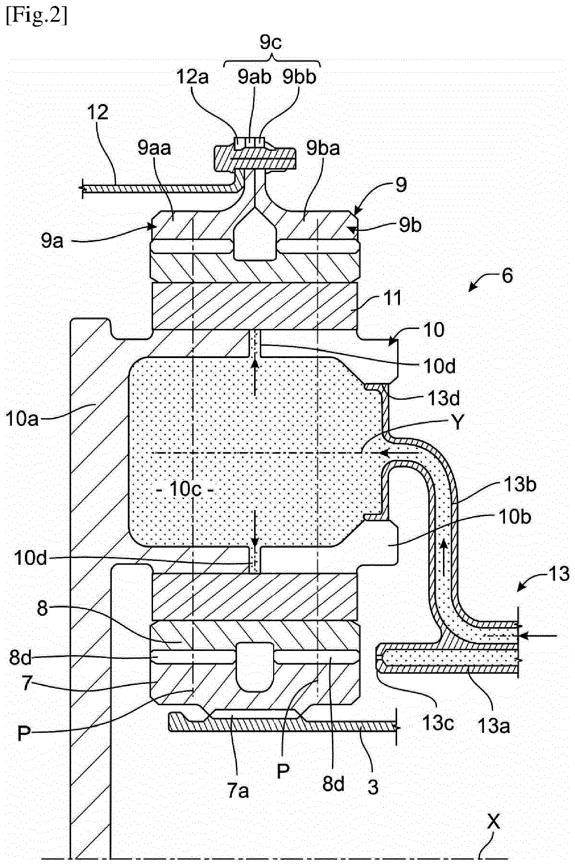

La figure 2 montre un réducteur épicycloïdal 6. En entrée, le réducteur 6 est relié en rotation à l'arbre BP 3, par exemple par l'intermédiaire de cannelures internes 7a. Ainsi, l'arbre BP 3 entraîne un pignon planétaire appelé le solaire 7. Classiquement, le solaire 7, dont l'axe de rotation est confondu avec celui de la turbomachine X, entraîne une série de pignons appelés satellites 8, qui sont équirépartis sur le même diamètre autour de l'axe de rotation X. Ce diamètre est égal au double de l'entraxe de fonctionnement entre le solaire 7 et les satellites 8. Le nombre de satellites 8 est généralement défini entre trois et sept pour ce type d'application.

L'ensemble des satellites 8 est maintenus par un châssis appelé porte-satellites 10. Chaque satellite 8 tourne autour de son propre axe Y, et engrène avec la couronne 9.

En sortie, nous avons :

- dans cette configuration épicycloïdale, l'ensemble des satellites 8 entraine en rotation le porte-satellite 10 autour de l'axe X de la turbomachine. La couronne est fixée au carter moteur ou stator 5 via un porte-couronne 12 et le porte-satellites 10 est fixé à l'arbre de soufflante 4.

- dans une autre configuration planétaire, l'ensemble des satellites 8 est maintenu par un porte-satellites 10 qui est fixé au carter moteur ou stator 5. Chaque satellite entraine la couronne qui est rapportée à l'arbre de soufflante 4 via un porte-couronne 12.

Chaque satellite 8 est monté libre en rotation à l'aide d'un palier 11, par exemple de type roulement ou palier hydrodynamique. Chaque palier 11 est prévu sur un des supports tubulaires 10b du porte-satellites 10 et tous les supports sont positionnés les uns par rapport aux autres à l'aide d'une cage 10a du porte-satellites 10. Il existe un nombre de supports tubulaires 10b et de paliers 11 égal au nombre de satellites. Pour des raisons de fonctionnement, de montage, de fabrication, de contrôle, de réparation ou de rechange, les supports 10b et la cage 10a peuvent être séparés en plusieurs pièces.

Pour les mêmes raisons citées précédemment, la denture d'un réducteur peut être séparée en plusieurs hélices présentant chacun un plan médian P. Dans notre exemple, nous détaillons le fonctionnement d'un réducteur à plusieurs hélices avec une couronne séparée en deux demi-couronnes :

- une demi-couronne amont 9a constituée d'une jante 9aa et d'une demi-bride de fixation 9ab. Sur la jante 9aa se trouve l'hélice amont de la denture du réducteur. Cette hélice amont engrène avec celle du satellite 8 qui engrène avec celle du solaire 7.

- une demi-couronne aval 9b constituée d'une jante 9ba et d'une demi-bride de fixation 9bb. Sur la jante 9ba se trouve l'hélice aval de la denture du réducteur. Cette hélice aval engrène avec celle du satellite 8 qui engrène avec celle du solaire 7.

Si les largeurs d'hélice varient entre le solaire 7, les satellites 8 et la couronne 9 à cause des recouvrements de denture, elles sont toutes centrées sur un plan médian P pour les hélices amont et sur un autre plan médian P pour les hélices aval. Dans le cas d'un roulement à deux rangées de rouleaux, chaque rangée d'éléments roulants est aussi de préférence, mais pas nécessairement centrée sur deux plans médians.

La demi-bride de fixation 9ab de la couronne amont 9a et la demi-bride de fixation 9bb de la couronne aval 9b forment la bride de fixation 9c de la couronne. La couronne 9 est fixée à un porte-couronne en assemblant la bride de fixation 9c de la couronne et la bride de fixation 12a du porte-couronne à l'aide d'un montage boulonné par exemple.

Les flèches de la figure 2 décrivent l'acheminement de l'huile dans le réducteur 6. L'huile arrive dans le réducteur 6 depuis la partie stator 5 dans un distributeur 13 par différents moyens qui ne seront pas précisés dans cette vue car ils sont spécifiques à un ou plusieurs types d'architecture. Le distributeur 13 comprend des injecteurs 13a et des bras 13b. Les injecteurs 13a ont pour fonction de lubrifier les dentures et les bras 13b ont pour fonction de lubrifier les paliers. L'huile est amenée vers l'injecteur 13a pour ressortir par l'extrémité 13c afin de lubrifier les dentures. L'huile est également amenée vers le bras 13b et circule via la bouche d'alimentation 13d du palier 11. L'huile circule ensuite à travers le support 10b dans une ou des cavités 10c pour ensuite ressortir par des canalisations 10d afin de lubrifier les paliers des satellites.

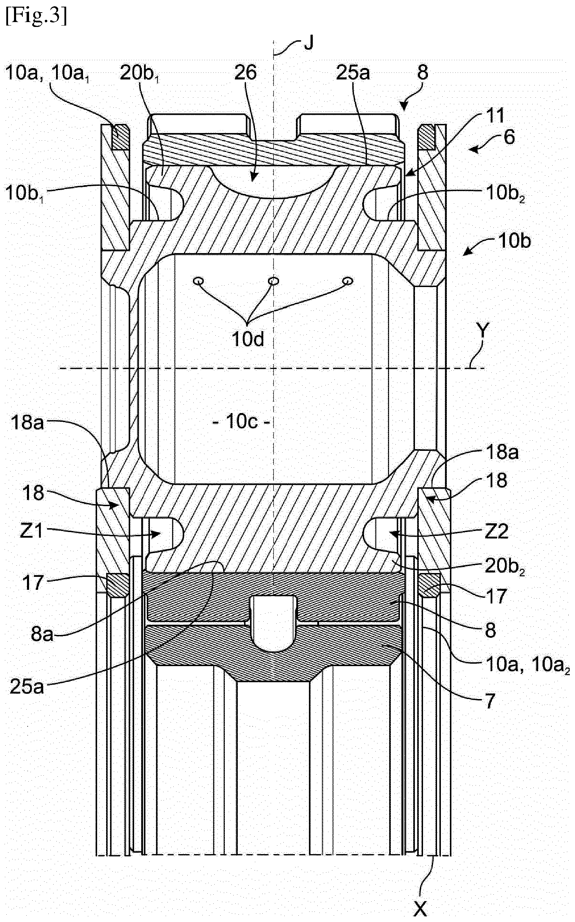

La figure 3 représente un réducteur mécanique 6 équipé de supports 10b formant des paliers lisses 11 dont un seul est visible.

Le palier lisse 11 de chaque satellite 8 comprend un corps cylindrique monobloc qui a une forme générale allongée le long de l'axe Y et qui comporte :

+ une surface cylindrique externe 25a de guidage s'étendant autour de l'axe Y,
+ une cavité interne 10c qui s'étend le long de l'axe Y, et
+ des orifices 10d formés dans le corps et s'étendant depuis la cavité 10c jusque sur la surface 25a ou une rainure 26 formée sur cette surface 25a. La surface 25a est configurée pour délimiter avec une surface cylindrique interne 8a du palier 8 un espace circonférentiel de réception d'huile et de formation d'un film d'huile.

Le corps du palier lisse 10b comprend en outre :

+ une première extension axiale 10b1 de montage située à une première extrémité longitudinale du corps,
+ un premier rebord annulaire 20b1 s'étendant autour de l'axe Y et de la première extension 10b1, et prolongeant axialement la surface 25a,
+ une seconde extension axiale 10b2 de montage située à une seconde extrémité longitudinale opposée du corps, et
+ un second rebord circonférentiel 20b2 s'étendant en partie autour de l'axe et de la seconde extension, et prolongeant axialement la surface 25a.

Le rebord 20b1 forme autour de la première extension 10b1 une première zone de souplesse Z1 qui a une forme annulaire autour de l'axe Y. Le rebord 20b2 forme autour de la seconde extension 10b2 une seconde zone de souplesse Z2 qui a une forme annulaire autour de l'axe Y. Les zones de souplesse Z1, Z2 sont donc continues sur 360° et sont axisymétriques vis-à-vis de l'axe Y. Les zones de souplesse Z1, Z2 sont en outre symétriques par rapport à un plan médian J perpendiculaire à l'axe Y et passant par le milieu du corps.

Les extensions axiales 10b1, 10b2 ont pour fonction de permettre le montage du palier 11 dans le réducteur 6 et en particulier sa fixation au porte-satellites 10.

Le porte-satellites 10 est partiellement représenté dans le dessin et comprend une cage 10a dans laquelle sont montés le solaire 7, les satellites 8 ainsi que les corps des paliers lisses 11.

La cage 10a comprend deux parois 10a1, 10a2 en général annulaires, qui sont perpendiculaires à l'axe X et à distance axiale l'une de l'autre. Ces parois 10a1, 10a2, sont en général reliées entre elles par une paroi cylindrique ou des pontets qui comprend ou qui définissent entre eux des ouvertures permettant l'engrènement des dentures des satellites 8 avec la denture de la couronne s'étendant autour de la cage 10a du porte-satellites 10.

Chacune des parois 10a1, 10a2 du porte-satellites 10 comprend des ouvertures 17 de montage de couvercles 18 de fixation des corps des paliers lisses 11. La première extension 10b1 du corps du palier lisse 11 est engagée dans un orifice central 18a de l'un de ces couvercles 18 qui est lui-même engagé dans une ouverture 17 d'une première des parois 10a1 du porte-satellites 10. La seconde extension 10b2 de corps du palier lisse 11 est engagée dans un orifice central 18a d'un autre couvercle 18 qui est lui-même engagé dans une autre ouverture 17 d'une seconde des parois 10a2 du porte-satellites 10. Le corps de chaque palier lisse 11 est donc fixé à la cage 10a du porte-satellites 10 par l'intermédiaire de deux couvercles 18 rapportés aux deux extrémités longitudinales de ce corps et fixés aux parois 10a1, 10a2 de cette cage 10a.

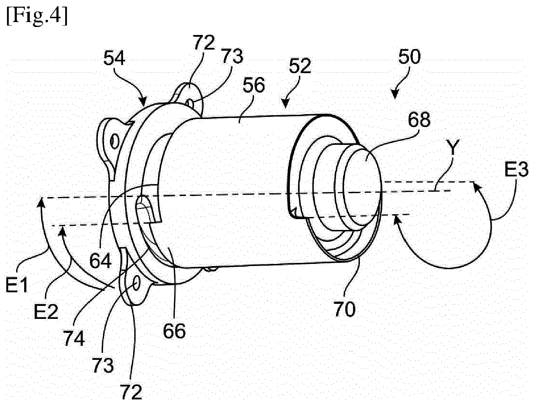

Cette configuration présente des inconvénients décrits plus haut et la présente invention propose un perfectionnement dont un premier mode de réalisation est illustré aux figures 4 à 7.

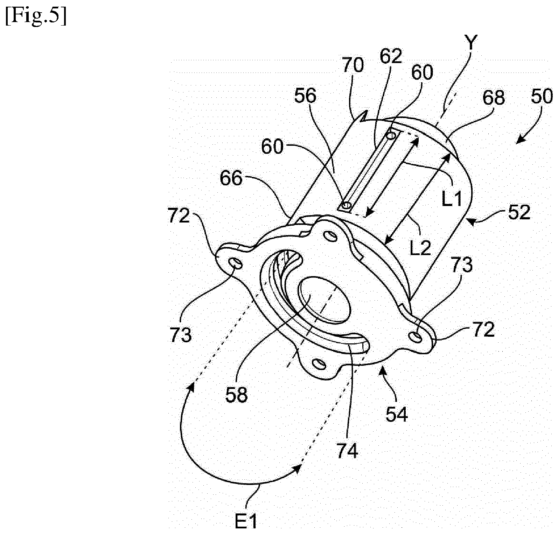

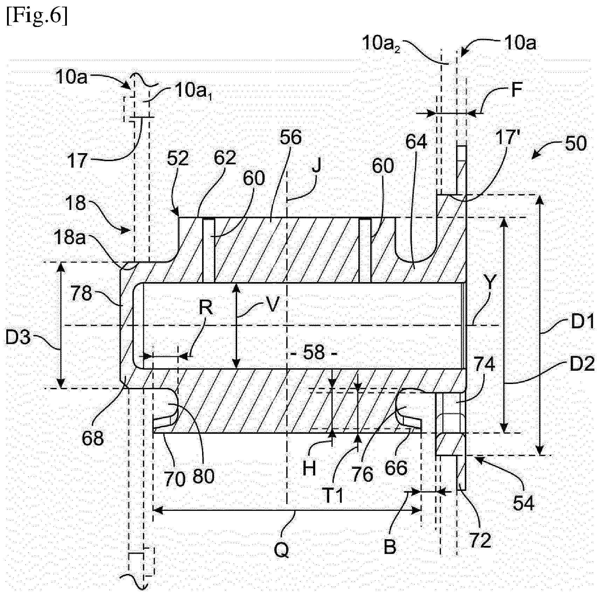

Les figures 4 à 6 montrent un palier lisse 50 selon l'invention, qui est représenté en perspective aux figures 4 et 5 et en coupe à la figure 6.

Le palier lisse 50 est formé d'une seule pièce par exemple en alliage métallique.

Le palier lisse 50 comprend :

- un corps cylindrique 52 ayant une forme générale allongée le long de l'axe Y, et
- un couvercle de fixation 54 qui est intégré au corps 52 et située à l'une des extrémités longitudinales de ce dernier.

Le corps 52 comprend :

+ une surface cylindrique externe 56 de guidage s'étendant autour de l'axe Y,
+ une cavité interne 58 qui s'étend le long de l'axe Y,
+ des orifices 60 formés dans le corps 52 et s'étendant depuis la cavité 58 jusque sur la surface 56 ou une rainure 62 formée sur cette surface 56,
+ une première extension axiale 64 de montage située à une première extrémité longitudinale du corps 52,
+ un premier rebord circonférentiel 66 s'étendant en partie autour de l'axe Y et de la première extension 64, et prolongeant axialement la surface 56,
+ une seconde extension axiale 68 de montage située à une seconde extrémité longitudinale opposée du corps 52, et
+ un second rebord circonférentiel 70 s'étendant en partie autour de l'axe Y et de la seconde extension 68, et prolongeant axialement la surface 56.

Le couvercle 54 est relié à la première extension axiale 64 et s'étend axialement en regard du premier rebord 66.

Dans l'exemple représenté, le couvercle 54 a une forme générale annulaire ou de disque et comprend un diamètre externe D1 supérieur à un diamètre externe D2 de la surface 56.

Le couvercle 54 comprend des pattes de fixation 72 qui s'étendent radialement vers l'extérieur depuis la périphérie externe du couvercle et du diamètre D1. Ces pattes 72 comportent des orifices 73 orientés axialement et destinés à recevoir des éléments de fixation à la cage précitée du porte-satellite. En variante, les pattes 72 pourraient être remplacées par une bride annulaire continue sur 360° autour du couvercle 54. Le nombre d'orifices 73 et d'éléments de fixation est de préférence inférieur à 20.

Le couvercle 54 comporte une lumière 74 traversante en direction axiale. Cette lumière 74 a une forme incurvée et s'étend en direction circonférentielle autour de l'axe Y.

La lumière 74 a une étendue angulaire E1 supérieure ou égale à une étendue angulaire E2 du premier rebord 66, et est située en regard d'un espace circonférentiel 76 défini entre le premier rebord 66 et la première extension 64. Ceci est avantageux dans la mesure où il permet de faire passer un outil, en particulier d'usinage, à travers la lumière 74 du couvercle 54, sur toute son étendue angulaire E1, pour former l'espace circonférentiel 76 dans le corps 52.

La lumière 74 a de préférence une dimension radiale T1, mesurée par rapport à l'axe Y, qui est supérieure à une dimension radiale H de l'espace 76, mesurée de la même façon. Cette dimension T1 est en outre avantageusement choisie pour être supérieure à un diamètre ou à une dimension transversale de l'outil précité, pour permettre son insertion et son déplacement dans la lumière 74.

Comme on le voit à la figure 6, la cavité 58 traverse axialement la première extension 64 et le couvercle 54, et est de préférence fermée au niveau de la seconde extension 68 ici par une cloison transversale 78. En variante, la cloison 78 pourrait être située ailleurs à l'intérieur de la cavité 58 et séparer par exemple cette dernière en deux espaces adjacents.

Les figures montrent que les rebords 66, 70 ont une même étendue E2, E3 autour de l'axe Y et sont disposés de manière symétrique par rapport à un plan médian J du corps perpendiculaire à cet axe Y. E2 et E3 sont de préférence compris entre 60 et 300°.

Dans l'exemple représenté, le corps 52 comprend la rainure 62 qui est formée sur la surface 56 et qui a une forme allongée le long de l'axe Y. Les orifices 60 qui communiquent avec la cavité 58 débouchent dans la rainure 62. Cette rainure 62 est décalée angulairement des premier et second rebords 66, 70 et présente une longueur L1 inférieure à une dimension axiale L2 minimale de la surface 56. Cette dimension L2 est mesurée à distance des rebords 66, 70 dans l'exemple représenté.

En ce qui concerne les autres dimensions du palier 50, on définit par :

+ H, la dimension radiale de l'espace circonférentiel 76 défini entre le premier rebord 66 et la première extension 64, ou de l'espace circonférentiel 80 défini entre le second rebord 70 et la seconde extension 68, mesurée par rapport à l'axe Y,
+ Q, la dimension axiale maximale de la surface 56 mesurée le long de l'axe au niveau des rebords 66, 70,
+ R, la dimension axiale maximale du ou de chaque espace circonférentiel 76, 80, mesurée le long de l'axe Y,
+ V, le diamètre interne maximal de la cavité 58, mesurée par rapport à l'axe Y,
+ B, la distance axiale entre le premier rebord 66 et le couvercle 54, mesurée le long de l'axe Y, et

+ F, l'épaisseur axiale maximale du couvercle 54, mesurée le long de l'axe Y.

De préférence, $0,02 < H/Q < 0,5$, et/ou $0,02 < H/R < 2$, et/ou $0,02 < H/D2 < 0,35$, et/ou $0,02 < R/Q < 0,4$.

Dans le mode de réalisation des figures 4 à 6, $B < F$, et/ou $B < H$, et/ou $B < R$.

La figure 6 montre le palier lisse 50 dans son environnement de montage. On constate que la cage 10a du porte-satellites comprend une première paroi 10a1, à gauche sur le dessin, qui comporte des premiers orifices 17 de montage de couvercles 18 comportant eux-mêmes des orifices 18a de montage des extensions axiales 68 des corps 52 des paliers lisses 50. La seconde paroi 10a2 de la cage 10a, à droite sur le dessin, comporte des seconds orifices 17' de montage des couvercles 54 des paliers lisses 50.

Chacun ces orifices 17' a un diamètre, correspondant sensiblement au diamètre D1 du couvercle 54, qui est supérieur au diamètre D3 des orifices 17.

Dans l'exemple représenté, le palier lisse 50 est monté en translation axiale de la droite vers la gauche dans l'orifice 17' de la paroi 10a2 de la cage 10a, puis le couvercle 18 peut être monté sur l'extension 68 et engagé dans l'orifice 17 de la paroi 10a1 de la cage 10a.

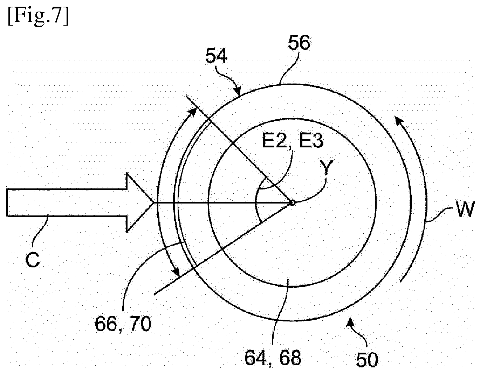

La figure 7 montre la localisation de la charge C en fonctionnement sur le palier lisse 50. Cette charge C est avantageusement localisée et répartie au niveau des rebords 66, 70. En pratique, cela revient à monter les paliers 50 dans la cage du porte-satellites de façon à ce que les rebords 66, 70 soient orientés du côté du solaire. La charge C transmise par le solaire aux satellites sera ainsi reprise par les paliers 50 au niveau de leurs rebords 66, 70 et donc de leurs souplesses Z1, Z2, ce qui permet de limiter le risque de désalignement des dentures d'engrènement en fonctionnement.

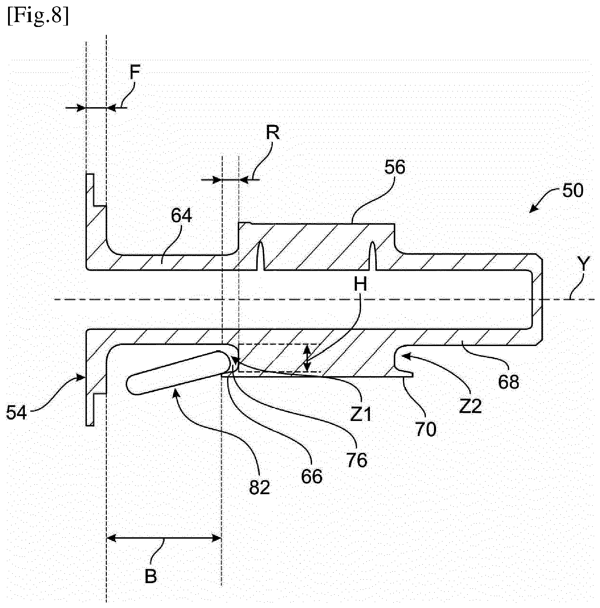

Dans la variante de réalisation de la figure 8, le palier lisse 50 a une dimension axiale supérieure à celle du précédent mode de réalisation. Cela vient du fait que les extensions 64, 68 sont rallongées de manière symétrique pour espacer le couvercle 54 vis-à-vis de la surface 56 et du rebord 66 en regard de ce couvercle 54.

Cette variante permet de faire passer un outil 82 d'usinage de l'espace 76, entre le couvercle 54 et le rebord 66, sans nécessité de prévoir une lumière traversante à travers le couvercle 5.

Dans l'exemple représenté, $B > 2.F$ et de préférence supérieur $B > 3.F$, et/ou $B > 2.H$ et de préférence supérieur $B > 3.H$, et/ou $B > 2.R$ et de préférence supérieur $B > 3.R$.

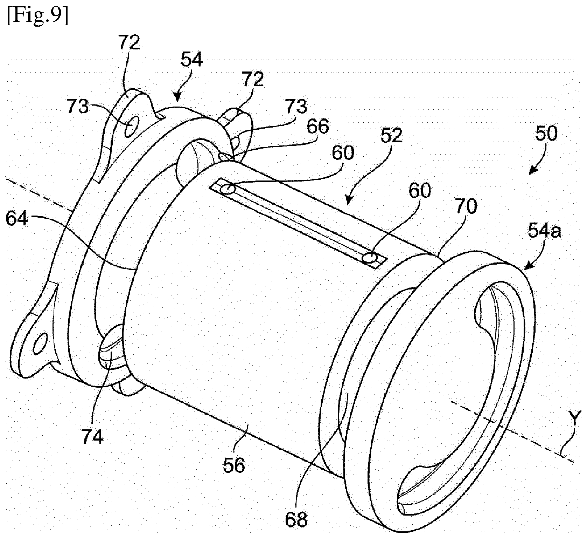

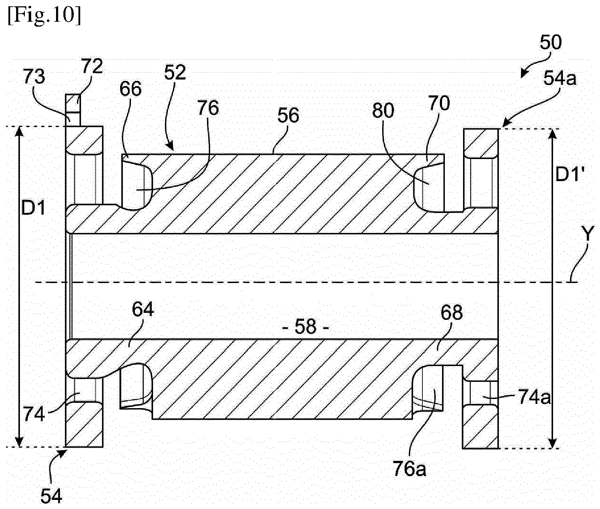

On se réfère maintenant aux figures 9 et 10 qui illustrent une variante de réalisation de l'invention.

Le palier lisse 50 des figures 9 et 10 comprend les caractéristiques du palier lisse décrit dans ce qui précède en relation avec les figures 4 et suivantes. Ces caractéristiques sont désignées par les mêmes références aux figures 9 et 10.

Le palier lisse 50 comprend en outre :

- un couvercle de fixation 54a qui est intégré au corps 52 et située à l'extrémité longitudinale de ce dernier qui est opposée au couvercle 54.

Le couvercle 54a est relié à la seconde extension axiale 68 et s'étend axialement en regard du second rebord 70.

Dans l'exemple représenté, le couvercle 54a a une forme générale annulaire ou de disque et comprend un diamètre externe D1' supérieur au diamètre externe D2 de la surface 56. D1' peut être égale à D1 et est de préférence inférieur à D1.

Le couvercle 54a ne comprend pas de pattes de fixation 72.

Le couvercle 54a comporte une lumière 74a traversante en direction axiale. Cette lumière 74a a une forme incurvée et s'étend en direction circonférentielle autour de l'axe Y.

La lumière 74a a une étendue angulaire similaire à celle de la lumière. Elle est située en regard d'un espace circonférentiel 76a défini entre le second rebord 70 et la seconde extension 68. Ceci est avantageux dans la mesure où il permet de faire passer un outil, en particulier d'usinage, à travers la lumière 74a du couvercle 54a, sur toute son étendue angulaire, pour former l'espace circonférentiel 76a dans le corps 52.

La lumière 74a a de préférence une dimension radiale similaire à celle de la lumière 74. Cette dimension est en outre avantageusement choisie pour être supérieure à un diamètre ou à une dimension transversale de l'outil précité, pour permettre son insertion et son déplacement dans la lumière 74a. Comme on le voit à la figure 10, la cavité 58 est ici dépourvue de cloison transversale 78.

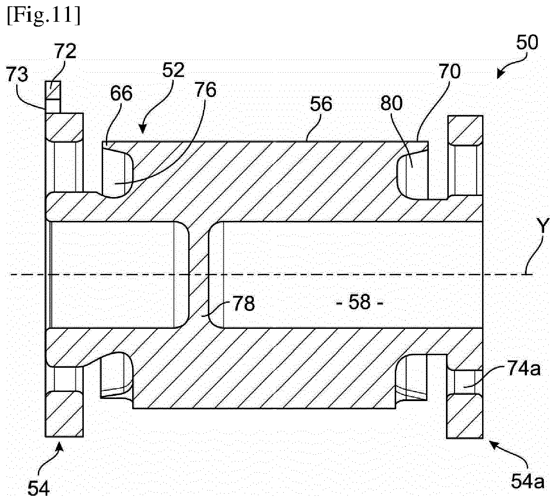

La variante de réalisation de la figure 11 diffère de la précédente variante de réalisation par la présence de la cloison 78 à l'intérieur de la cavité 58. Cette cloison 78 sépare la cavité 58 en deux espaces adjacents qui n'ont pas forcément les mêmes dimensions et en particulier les mêmes longueurs le long de l'axe Y comme dans l'exemple représenté.

**Revendications**

1. Palier lisse (50) pour un réducteur mécanique (6) de turbomachine, en particulier d'aéronef, le palier lisse (50) étant formé d'une seule pièce et comprenant :

   - un corps cylindrique (52) ayant une forme générale allongée le long d'un axe (Y) et comportant :

      + une surface cylindrique externe (56) de guidage s'étendant autour de l'axe (Y),
      + une cavité interne (58) qui s'étend le long de l'axe (Y),
      + des orifices (60) formés dans le corps (52)

et s'étendant depuis la cavité (58) jusque sur la surface (56) ou jusqu'à une rainure (62) formée sur cette surface (56),

+ une première extension axiale (64) de montage située à une première extrémité longitudinale du corps (52),

+ un premier rebord circonférentiel (66) s'étendant en partie autour de l'axe (Y) et de la première extension (64), et prolongeant axialement ladite surface (56),

+ une seconde extension axiale (68) de montage située à une seconde extrémité longitudinale opposée du corps (52), et

+ un second rebord circonférentiel (70) s'étendant en partie autour de l'axe (Y) et de la seconde extension (68), et prolongeant axialement ladite surface (56),

**caractérisé en ce qu'**il comprend en outre :

- un couvercle de fixation (54) qui est relié à ladite première extension axiale (64) et qui s'étend axialement en regard dudit premier rebord (66), le couvercle (54) comprenant une bride annulaire externe de fixation ou des pattes externes de fixation (72), cette bride ou ces pattes (72) comportant des orifices (73) orientés axialement et destinés à recevoir des éléments de fixation.

2. Palier lisse (50) selon la revendication 1, dans lequel le couvercle (54) a une forme générale annulaire ou de disque et comprend un diamètre externe (D1) supérieur à un diamètre externe (D2) de ladite surface (56).

3. Palier lisse (50) selon l'une des revendications précédentes, dans lequel le couvercle (54) comporte une lumière (74) traversante en direction axiale, cette lumière (74) ayant une forme incurvée et s'étendant en direction circonférentielle autour de l'axe (Y).

4. Palier lisse (50) selon la revendication précédente, dans lequel la lumière (74) a une étendue angulaire supérieure ou égale à une étendue angulaire dudit premier rebord (66), et est située en regard d'un espace circonférentiel (76) défini entre le premier rebord (66) et la première extension (64).

5. Palier lisse (50) selon la revendication précédente, dans lequel la lumière (74) a une dimension radiale (T1), mesurée par rapport à l'axe (Y), qui est supérieure à une dimension radiale (H) dudit espace (76), mesurée de la même façon.

6. Palier lisse (50) selon l'une des revendications précédentes, dans lequel ladite cavité (56) traverse axialement la première extension (64) et le couvercle (56), et est de préférence fermée au niveau de ladite seconde extension (68).

7. Palier lisse (50) selon l'une des revendications précédentes, dans lequel les premier et second rebords (66, 70) ont une même étendue angulaire (E2, E3) autour de l'axe (Y) et sont disposés de manière symétrique par rapport à un plan médian (J) du corps (52) perpendiculaire audit axe (Y).

8. Palier lisse (50) selon l'une des revendications précédentes, dans lequel le corps (52) comprend une rainure (62) qui est formée sur ladite surface (56) et qui a une forme allongée le long de l'axe (Y), lesdits orifices (60) débouchant dans cette rainure (62) qui est décalée angulairement desdits premier et second rebords (66, 70) et qui a une longueur (L1) inférieure à une dimension axiale minimale (L2) de ladite surface (56).

9. Palier lisse (50) selon l'une des revendications précédentes, dans lequel :

-

$$0,02 < H/Q < 0,5,$$

et/ou
-

$$0,02 < H/R < 2,$$

et/ou
-

$$0,02 < H/D2 < 0,35,$$

et/ou
-

$$0,02 < R/Q < 0,4,$$

avec :

+ H une dimension radiale d'un espace circonférentiel (76) défini entre le premier rebord (66) et la première extension (64), ou d'un espace circonférentiel (80) défini entre le second rebord (70) et la seconde extension (68), mesurée par rapport à l'axe (Y),

+ Q une dimension axiale maximale de la surface (56) mesurée le long de l'axe (Y) au niveau desdites première et seconde extensions axiales (66, 70),

+ R une dimension axiale maximale dudit es-

17 EP 4 336 059 B1 18

pace circonférentiel, mesurée le long de l'axe, et

+ D2 un diamètre interne maximal de la cavité (58), mesurée par rapport à l'axe (Y).

**10.** Palier lisse (50) selon l'une des revendications précédentes, dans lequel :

-

$$B < F,$$

et/ou

-

$$B < H,$$

et/ou

-

$$B < R,$$

avec :

+ B une distance axiale entre le premier rebord (66) et le couvercle (54), mesurée le long de l'axe (Y),

+ F une épaisseur axiale maximale du couvercle (54), mesurée le long de l'axe (Y),

+ H une dimension radiale d'un espace circonférentiel (76) défini entre le premier rebord (66) et la première extension (64), ou d'un espace circonférentiel (80) défini entre le second rebord (70) et la seconde extension (68), mesurée par rapport à l'axe (Y), et

+ R une dimension axiale maximale dudit espace circonférentiel (76, 80), mesurée le long de l'axe.

**11.** Palier lisse (50) selon l'une des revendications 1 à 8, dans lequel :

- B > 2.F et de préférence supérieur B > 3.F, et/ou
- B > 2.H et de préférence supérieur B > 3.H, et/ou
- B > 2.R et de préférence supérieur B > 3.H,

avec :

+ B une distance axiale entre le premier rebord (66) et le couvercle (54), mesurée le long de l'axe (Y),

+ F une épaisseur axiale maximale du couvercle (54), mesurée le long de l'axe (Y),

+ H une dimension radiale d'un espace circonférentiel (76) défini entre le premier rebord (66) et la première extension (64), ou d'un espace circonférentiel (80) défini entre le second rebord

(70) et la seconde extension (68), mesurée par rapport à l'axe (Y), et

+ R une dimension axiale maximale dudit espace circonférentiel (76, 80), mesurée le long de l'axe (Y).

**12.** Réducteur mécanique (6) de turbomachine (1), en particulier d'aéronef, comportant :

- un solaire (7) ayant un premier axe de rotation (X),
- une couronne (9) qui s'étend autour du solaire (7),
- des satellites (8) qui sont engrenés avec le solaire (7) et la couronne (9),
- des paliers lisses (50) selon l'une des revendications précédentes de guidage en rotation des satellites (8) autour de seconds axes de rotation (Y) parallèles audit premier axe de rotation (X), et
- un porte-satellites (10) qui comprend une cage (10a) définissant un logement de réception du solaire (7), des satellites (8) et des corps (52) des paliers lisses (50), cette cage (10a) comportant deux parois (10a, 10a2) perpendiculaires auxdits premier et seconds axes de rotation (X, Y), une première de ces parois (10a1) comportant des premiers orifices (17) de montage de couvercles (18) comportant eux-mêmes des orifices (18a) de montage des secondes extensions axiales (68) des corps (52) des paliers lisses (50), et une seconde de ces parois (10a2) comportant des seconds orifices (17') de montage des couvercles (54) des paliers lisses (50).

**13.** Réducteur mécanique (6) selon la revendication précédente, dans lequel les seconds orifices (17') ont un diamètre (D1) supérieur au diamètre (D3) des premiers orifices (17), ces diamètres (D1, D3) étant mesurés par rapport au second axe de rotation (Y) correspondant.

**14.** Turbomachine (1), en particulier d'aéronef, comportant au moins un palier lisse (50) selon l'une des revendications 1 à 11 ou au moins un réducteur mécanique (6) selon l'une des revendications 12 ou 13.

**Patentansprüche**

**1.** Gleitlager (50) für ein mechanisches Getriebe (6) eines Turbotriebwerks, insbesondere eines Luftfahrzeugs, wobei das Gleitlager (50) einteilig ausgebildet ist und Folgendes umfasst:

- einen zylindrischen Körper (52) mit einer im Wesentlichen länglichen Form entlang einer Achse (Y), der Folgendes umfasst:

+ eine äußere zylindrische Führungsfläche (56), die sich um die Achse (Y) herum erstreckt,
+ einen inneren Hohlraum (58), der sich entlang der Achse (Y) erstreckt,
+ Öffnungen (60), die in dem Körper (52) ausgebildet sind und sich von dem Hohlraum (58) bis zur Oberfläche (56) oder bis zu einer an dieser Oberfläche (56) ausgebildeten Nut (62) erstrecken,
+ eine erste axiale Montageverlängerung (64), die an einem ersten Längsende des Körpers (52) angeordnet ist,
+ einen ersten Umfangsrand (66), der sich teilweise um die Achse (Y) und die erste Verlängerung (64) erstreckt und die Oberfläche (56) axial verlängert,
+ eine zweite axiale Montageverlängerung (68), die an einem zweiten Längsende des Körpers (52) angeordnet ist, und
+ einen zweiten Umfangsrand (70), der sich teilweise um die Achse (Y) und die zweite Verlängerung (68) erstreckt und die Oberfläche (56) axial verlängert,

**dadurch gekennzeichnet, dass** es weiter umfasst:

- eine Befestigungsabdeckung (54), die mit der ersten axialen Verlängerung (64) verbunden ist und sich axial gegenüber dem ersten Rand (66) erstreckt, wobei die Abdeckung (54) einen äußeren ringförmigen Befestigungsflansch oder äußere Befestigungslaschen (72) umfasst, wobei der Flansch oder die Laschen (72) axial ausgerichtete Öffnungen (73) zur Aufnahme von Befestigungselementen umfassen.

2. Gleitlager (50) nach Anspruch 1, wobei die Abdeckung (54) eine im Allgemeinen ringförmige oder scheibenförmige Form aufweist und einen Außendurchmesser (D1) aufweist, der größer ist als ein Außendurchmesser (D2) der Oberfläche (56).

3. Gleitlager (50) nach einem der vorhergehenden Ansprüche, wobei die Abdeckung (54) einen in axialer Richtung durchgehenden Spalt (74) aufweist, wobei der Spalt (74) eine gekrümmte Form aufweist und sich in Umfangsrichtung um die Achse (Y) erstreckt.

4. Gleitlager (50) nach dem vorhergehenden Anspruch, wobei die Öffnung (74) eine Winkelerstreckung aufweist, die größer oder gleich einer Winkelerstreckung des ersten Randes (66) ist, und gegenüber einem Umfangsraum (76) angeordnet ist, der zwischen dem ersten Rand (66) und der ersten Verlängerung (64) definiert ist.

5. Gleitlager (50) nach dem vorhergehenden Anspruch, wobei der Spalt (74) eine radiale Abmessung (T1) aufweist, gemessen in Bezug auf die Achse (Y), die größer ist als eine radiale Abmessung (H) des Raums (76), gemessen auf die gleiche Weise.

6. Gleitlager (50) nach einem der vorhergehenden Ansprüche, wobei der Hohlraum (56) axial durch die erste Verlängerung (64) und die Abdeckung (56) verläuft und vorzugsweise im Bereich der zweiten Verlängerung (68) geschlossen ist.

7. Gleitlager (50) nach einem der vorhergehenden Ansprüche, wobei der erste und der zweite Rand (66, 70) die gleiche Winkelerstreckung (E2, E3) um die Achse (Y) aufweisen und symmetrisch zu einer Mittelebene (J) des Körpers (52) angeordnet sind, die senkrecht zu der Achse (Y) verläuft.

8. Gleitlager (50) nach einem der vorhergehenden Ansprüche, wobei der Körper (52) eine Nut (62) umfasst, die auf der Oberfläche (56) ausgebildet ist und eine längliche Form entlang der Achse (Y) aufweist, wobei die Öffnungen (60) in die Nut (62) münden, die gegenüber dem ersten und zweiten Rand (66, 70) winklig versetzt ist und eine Länge (L1) aufweist, die kleiner ist als eine minimale axiale Abmessung (L2) der Oberfläche (56).

9. Gleitlager (50) nach einem der vorhergehenden Ansprüche, wobei:

-

$$0,02 < H/Q < 0,5,$$

und/oder

-

$$0,02 < H/R < 2,$$

und/oder

-

$$0,02 < H/D2 < 0,35,$$

und/oder

-

$$0,02 < R/Q < 0,4,$$

worin:

+ H eine radiale Abmessung eines Umfangsraums (76) ist, der zwischen dem ersten Rand (66) und der ersten Verlängerung (64) definiert ist, oder eines Umfangsraums (80), der zwischen dem zweiten Rand (70) und der zweiten Verlängerung (68) definiert ist, gemessen in Bezug auf die Achse (Y),

+ Q eine maximale axiale Abmessung der Oberfläche (56) ist, gemessen entlang der Achse (Y) im Bereich der ersten und zweiten axialen Verlängerungen (66, 70), + R eine maximale axiale Abmessung des Umfangsraums ist, gemessen entlang der Achse, und

+ D2 ein maximaler Innendurchmesser des Hohlraums (58) ist, gemessen in Bezug auf die Achse (Y).

10. Gleitlager (50) nach einem der vorhergehenden Ansprüche, wobei:

-

$$B < F,$$

und/oder

-

$$B < H,$$

und/oder

-

$$B < R,$$

worin:

+ B ein axialer Abstand zwischen der ersten Kante (66) und der Abdeckung (54) ist, gemessen entlang der Achse (Y),

+ F eine maximale axiale Dicke der Abdeckung (54) ist, gemessen entlang der Achse (Y),

+ H eine radiale Abmessung eines Umfangsraums (76) ist, der zwischen dem ersten Rand (66) und der ersten Verlängerung (64) definiert ist, oder eines Umfangsraums (80), der zwischen dem zweiten Rand (70) und der zweiten Verlängerung (68) definiert ist, gemessen in Bezug auf die Achse (Y), und

+ R eine maximale axiale Abmessung des Umfangsraums (76, 80) ist, gemessen entlang der Achse.

11. Gleitlager (50) nach einem der Ansprüche 1 bis 8, wobei:

- B > 2.F und vorzugsweise größer B > 3.F ist, und/oder

- B > 2.H und vorzugsweise größer B > 3.H, und/oder

- B > 2.R und vorzugsweise größer B > 3.H,

worin:

+ B ein axialer Abstand zwischen der ersten Kante (66) und der Abdeckung (54) ist, gemessen entlang der Achse (Y),

+ F eine maximale axiale Dicke der Abdeckung (54) ist, gemessen entlang der Achse (Y),

+ H eine radiale Abmessung eines Umfangsraums (76) ist, der zwischen dem ersten Rand (66) und der ersten Verlängerung (64) definiert ist, oder eines Umfangsraums (80), der zwischen dem zweiten Rand (70) und der zweiten Verlängerung (68) definiert ist, gemessen in Bezug auf die Achse (Y), und

+ R eine maximale axiale Abmessung des Umfangsraums (76, 80) ist, gemessen entlang der Achse (Y).

12. Mechanisches Untersetzungsgetriebe (6) für ein Turbotriebwerk (1), insbesondere eines Luftfahrzeugs, umfassend:

- ein Sonnenrad (7), das eine erste Drehachse (X) aufweist,

- eine Krone (9), die sich um das Sonnenrad (7) erstreckt,

- Satelliten (8), die mit dem Sonnenrad (7) und der Krone (9) kämmen,

- Gleitlager (50) nach einem der vorhergehenden Ansprüche zum Führen der Satelliten (8) in Drehung um zweite Drehachsen (Y), die parallel zur ersten Drehachse (X) verlaufen, und

- einen Satellitenträger (10), der einen Käfig (10a) umfasst, der eine Aufnahme für das Sonnenrad (7), die Satelliten (8) und die Körper (52) der Gleitlager (50) definiert, wobei der Käfig (10a) zwei Wände (10a, 10a2) aufweist, die senkrecht zur ersten und zweiten Drehachse (X, Y) stehen, wobei eine erste dieser Wände (10a1) erste Öffnungen (17) zur Montage von Abdeckungen (18) aufweist, die ihrerseits Öffnungen (18a) zur Montage der zweiten axialen Verlängerungen (68) der Körper (52) der Gleitlager (50) aufweisen, und eine zweite dieser Wände (10a2) zweite Öffnungen (17') zur Befestigung der Abdeckungen (54) der Gleitlager (50) aufweist.

13. Mechanisches Untersetzungsgetriebe (6) nach dem vorhergehenden Anspruch, wobei die zweiten Öffnungen (17') einen Durchmesser (D1) aufweisen, der größer ist als der Durchmesser (D3) der ersten Öffnungen (17), wobei diese Durchmesser (D1, D3) in Bezug auf die entsprechende zweite Drehachse (Y) gemessen werden.

14. Turbotriebwerk (1), insbesondere eines Luftfahrzeugs, das mindestens ein Gleitlager (50) nach einem der Ansprüche 1 bis 11 oder mindestens ein mechanisches Untersetzungsgetriebe (6) nach einem der Ansprüche 12 oder 13 umfasst.

**Claims**

1. A plain bearing (50) for a mechanical reducer (6) for a turbomachine, in particular for an aircraft, the plain bearing (50) being integrally formed and comprising:

   - a cylindrical body (52) having a generally elongated shape along an axis (Y) and comprising:

      + an external cylindrical guide surface (56) extending around the axis (Y),
      + an internal cavity (58) extending along the axis (Y),
      + orifices (60) formed in the body (52) and extending from the cavity (58) to the surface (56) or to a groove (62) formed on this surface (56),
      + a first axial mounting extension (64) located at a first longitudinal end of the body (52),
      + a first circumferential edge (66) extending partly around the axis (Y) and the first extension (64), and axially extending said surface (56),
      + a second axial mounting extension (68) located at a second opposite longitudinal end of the body (52), and
      + a second circumferential edge (70) extending partly around the axis (Y) and the second extension (68), and axially extending said surface (56),

   **characterised in that** it further comprises:

      - an attachment cover (54) connected to said first axial extension (64) and extending axially opposite said first edge (66), the cover (54) comprising an external annular attachment flange or external attachment tabs (72), this flange or these tabs (72) comprising axially oriented orifices (3) intended to receive attachment elements.

2. The plain bearing (50) as claimed in claim 1, wherein the cover (54) is generally annular or disc-shaped and comprises an external diameter (D1) greater than an external diameter (D2) of said surface (56).

3. The plain bearing (50) according to one of the preceding claims, wherein the cover (54) comprises a slit (74) passing through it in the axial direction, this slit (74) having a curved shape and extending in the circumferential direction about the axis (Y).

4. The plain bearing (50) according to the preceding claim, wherein the slit (74) has an angular extent greater than or equal to an angular extent of said first edge (66), and is located opposite a circumferential space (76) defined between the first edge (66) and the first extension (64).

5. The plain bearing (50) according to the preceding claim, wherein the slit (74) has a radial dimension (T1), measured with respect to the axis (Y), which is greater than a radial dimension (H) of said space (76), measured in the same way.

6. The plain bearing (50) according to one of the preceding claims, wherein said cavity (56) axially passes through the first extension (64) and the cover (56), and is preferably closed at the level of said second extension (68).

7. The plain bearing (50) according to one of the preceding claims, wherein the first and second edges (66, 70) have a same angular extent (E2, E3) about the axis (Y) and are arranged symmetrically with respect to a median plane (J) of the body (52) perpendicular to said axis (Y).

8. The plain bearing (50) according to one of the preceding claims, wherein the body (52) comprises a groove (62) which is formed on said surface (56) and which has an elongate shape along the axis (Y), said orifices (60) opening into this groove (62) which is angularly offset from said first and second edges (66, 70) and which has a length (L1) less than a minimum axial dimension (L2) of said surface (56).

9. The plain bearing (50) according to one of the preceding claims, wherein:

   -

   $$0.02 < H/Q < 0.5,$$

   and/or
   -

   $$0.02 < H/R < 2,$$

   and/or
   -

   $$0.02 < H/D2 < 0.35,$$

and/or

-

$$0.02 < R/Q < 0.4,$$

with:

+ H a radial dimension of a circumferential space (76) defined between the first edge (66) and the first extension (64), or of a circumferential space (80) defined between the second edge (70) and the second extension (68), measured with respect to the axis (Y),
+ Q a maximum axial dimension of the surface (56) measured along the axis (Y) at the level of said first and second axial extensions (66, 70),
+ R is the maximum axial dimension of said circumferential space, measured along the axis, and
+ D2 is the maximum internal diameter of the cavity (58), measured with respect to the axis (Y).

10. The plain bearing (50) according to one of the preceding claims, wherein:

-

$$B < F,$$

and/or

-

$$B < H,$$

and/or

-

$$B < R,$$

with:

+ B an axial distance between the first edge (66) and the cover (54), measured along the axis (Y),
+ F a maximum axial thickness of the cover (54), measured along the axis (Y),
+ H a radial dimension of a circumferential space (76) defined between the first edge (66) and the first extension (64), or of a circumferential space (80) defined between the second edge (70) and the second extension (68), measured with respect to the axis (Y), and
+ R a maximum axial dimension of said circumferential space (76, 80), measured along the axis.

11. The plain bearing (50) according to one of claims 1 to 8, wherein:

- B > 2.F and preferably higher B > 3.F, and/or
- B > 2.H and preferably higher B > 3.H, and/or
- B > 2.R and preferably higher B > 3.H,

with:

+ B an axial distance between the first edge (66) and the cover (54), measured along the axis (Y),
+ F is the maximum axial thickness of the cover (54), measured along the axis (Y),
+ H a radial dimension of a circumferential space (76) defined between the first edge (66) and the first extension (64), or of a circumferential space (80) defined between the second edge (70) and the second extension (68), measured with respect to the axis (Y), and
+ R a maximum axial dimension of said circumferential space (76, 80), measured along the axis (Y).

12. A mechanical reducer (6) for a turbomachine (1), in particular for an aircraft, comprising :

- a sun gear (7) with a first axis of rotation (X),
- a ring gear (9) extending around the sun gear (7),
- planet gears (8) which are meshed with the sun gear (7) and the ring gear (9),
- plain bearings (50) according to one of the preceding claims for guiding the planet gears (8) in rotation about second axes of rotation (Y) parallel to said first axis of rotation (X), and
- a planet carrier (10) which comprises a cage (10a) defining a housing for receiving the sun gear (7), the planet gears (8) and the bodies (52) of the plain bearings (50), this cage (10a) comprising two walls (10a, 10a2) perpendicular to said first and second axes of rotation (X, Y), a first of these walls (10a1) comprising first orifices (17) for mounting covers (18) themselves comprising orifices (18a) for mounting the second axial extensions (68) of the bodies (52) of the plain bearings (50), and a second of these walls (10a2) comprising second orifices (17') for mounting the covers (54) of the plain bearings (50).

13. The mechanical reducer (6) according to the preceding claim, wherein the second orifices (17') have a diameter (D1) greater than the diameter (D3) of the first orifices (17), these diameters (D1, D3) being measured with respect to the corresponding second axis of rotation (Y).

14. A turbomachine (1), in particular for an aircraft, comprising at least one plain bearing (50) according to one of claims 1 to 11 or at least one mechanical reducer (6) according to one of claims 12 to 13.

[Fig.1]

[Fig.2]

[Fig.3]

[Fig.4]

[Fig.5]

[Fig.6]

[Fig.7]

[Fig.8]

[Fig.9]

[Fig.10]

[Fig.11]

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20200378436 A1
- WO 2019053374 A1
- FR 3071022 A1
- FR 3098562 A1